# EUROPÄISCHE PATENTSCHRIFT

(11) **EP 0 978 749 B1**
(45) Veröffentlichungstag und Bekanntmachung des Hinweises auf die Patenterteilung: **16.04.2003**
(21) Anmeldenummer: 99115466.7
(22) Anmeldetag: 05.08.1999
(51) Int. Cl.: G02C 1/04

(54) **Brille**
Spectacles
Lunettes

(30) Priorität: 05.08.1998 DE 19835386
(43) Veröffentlichungstag der Anmeldung: 09.02.2000
(73) Patentinhaber: Temming, Markus, 33334 Gütersloh (DE)
(72) Erfinder: Temming, Markus, 33334 Gütersloh (DE)
(74) Vertreter: Rolf, Gudrun

(56) Entgegenhaltungen:
- EP-A- 0 685 754
- WO-A-97/23803
- DE-C- 925 915
- FR-A- 2 360 900
- GB-A- 760 625
- US-A- 2 256 846

## Beschreibung

Die Erfindung betrifft eine Brille aus einem Brillengestell mit einer Halterung für die Brillengläser und mit über Scharniere angelenkten Bügein gemäß dem Oberbegriff des Hauptanspruches.

Eine bekannte Halterung für Brillengläser besteht aus einem ein Brillenglas teilweise umschließenden Kunststoffaden, der an seinen Enden im Brillengestell festgelegt ist, DE-PS 923 812.

Die bekannte Befestigung eines Brillenglases mittels eines Kunststofffadens erfordert das Vorhandensein separater Befestigungsteile an einem Brillengestell wie beispielsweise keilförmige Nieten, wodurch sich die Fertigung eines solchen Brillengestelles unnötig verkompliziert und die Befestigung, insbesondere bei extrem dünnen Brillengestellen, trotzdem deutlich erkennbar bleibt.

An diese Brillenfassungen, bei denen die Gläser mit einem Faden Befestigt sind, der den Umfang der Gläser wenigstens teilweise umschließt, sind aus FR 77 117 01 A oder EP 0 685 754 A1 bekannt.

Aufgabe der Erfindung ist es, eine Brille zur Verfügung zu stellen, die eine verbesserte Befestigungsmöglichkeit für Brillengläser von rahmenlosen Brillengestellen aufweist.

Die Lösung dieser Aufgabe wird in Verbindung mit den Oberbegriffsmerkmalen erfindungsgemäß durch die im kennzeichnenden Teil des Patentanspruches 1 angegebene technische Lehre vermittelt.

Bei der erfinderischen Halterung für ein Brillenglas mittels eines Fadens ist in einem Brillenglas eine Durchtrittsöffnung für den Faden vorgesehen, der in einer Auszugsrichtung des Fadens vor dem Brillenglas mit einer Verdickung versehen ist, die stärker ist als die engste Stelle der Durchtrittsöffnung weit, so daß das Fadenende unmittelbar im Brillenglas festgelegt werden kann und nicht am Brillengestell befestigt werden muß.

Zur Befestigung eines Brillenglases wird der Faden mindestens einfach um das Brillengestell herumgewunden und anschließend auf bekannte Art und Weise durch eine äußere Nut im Glasrand geführt und das andere Ende des Fadens entweder am Brillengestell oder ebenfalls unmittelbar im Glas festgelegt. Diese Befestigungsart ermöglicht nicht nur eine neue Designrichtung einer Brillenkollektion, sondern vereinfacht die Konstruktion von Brillengestellen sowie die Montage der Brillengläser, für die keine zusätzlichen Befestigungsteile an einem Brillengestell angeordnet werden müssen. Die Anforderung an das Bohrloch in dem Brillenglas, welches insbesondere auch aus Kunststoff gefertigt sein kann, können sehr gering gehalten werden, da sich beispielsweise ein durch Wärme verformtes Ende eines Fadens an dessen Kontur anpaßt. Insgesamt verringert sich zudem die Bruchgefahr eines Brillenglases, da keine Spannungen herkömmlicher Befestigungsteile auf das Glas einwirken.

Weitere vorteilhafte Ausgestaltungen des Gegenstandes der Erfindung ergeben sich aus und in Kombination mit den weiteren Unteransprüchen.

Eine besonders vorteilhafte Ausführungsform der Halterung für ein Brillenglas besteht darin, daß ein mit seinen Enden durch jeweils eine Durchtrittsöffnung in einem Brillenglas hindurchgeführter Faden jeweils eine Verdickung aufweist und die Enden so gegen ein Herausziehen gesichert sind. Bevorzugterweise sind die Durchtrittsöffnungen konisch ausgebildet, so daß mindestens ein Teil der Verdickung eines Fadenendes darin aufgenommen werden kann oder letztlich der hervorstehende Rest abgetrennt werden kann und kein Materialvorstand des Fadens über die Glasoberfläche vorhanden ist.

Diese Befestigungsform eines Brillenglases in einem Brillengestell ist extrem einfach und erlaubt sehr viele Variationen mittels einem, zwei oder mehreren der Befestigung dienenden Fäden in einer oder mehreren Durchtrittsöffnungen und einfach oder mehrfach um das Gestell herumgeschlungenen Windungen.

Nachfolgend ist ein Ausführungsbeispiel der Erfindung anhand von Zeichnungen näher beschrieben. Es zeigen:

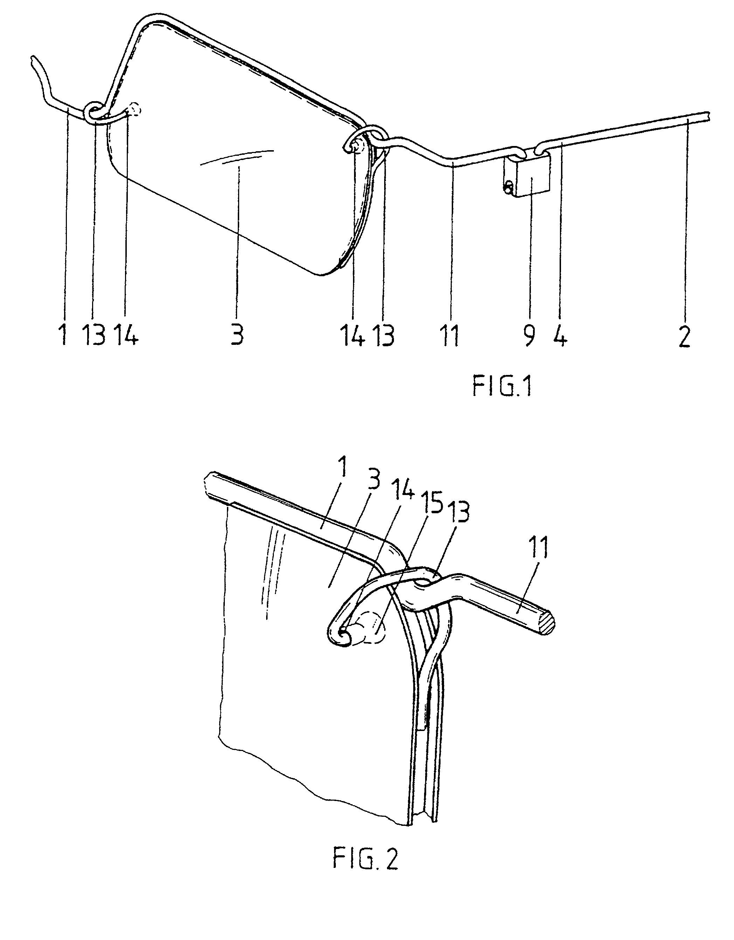

- Fig. 1: eine Teilansicht eines Brillengestells mit einer Halterung für ein Brillenglas und einem Scharnier,
- Fig. 2: eine vergrößerte Darstellung der Halterung für ein Brillenglas.

Die Brille besteht aus einem Brillengestell 1 mit einer Halterung für die Brillengläser 3 und mit über jeweils einen Scharnierblock 9 angelenkten Bügeln 2. Der Scharnierblock 9 besitzt eine in einer senkrechten Richtung eingebrachte zylindrische Ausnehmung 5 für das Bügelende 4, welches etwa rechtwinklig umgeformt ist und sich in die Ausnehmung 5 erstreckt.

Die Halterung für ein Brillenglas 3 mittels den Umfang eines Brillenglases 3 mindestens teilweise umschließenden Fadens 13 besteht aus dem Einbringen einer Durchtrittsöffnung 14 für den Faden 13, der hinter der Durchtrittsöffnung 14 mit einer Verdickung 15 versehen ist, so daß er nicht aus der Durchtrittsöffnung 14 herausziehbar ist, wonach der Faden 13 mindestens einfach um das Brillengestell 1 herumgewunden ist und anschließend ein Brillenglas auf bekannte Art und Weise befestigt. Das andere Ende des Fadens 13 kann auf eine herkömmliche Art an einem Brillengestell 1 festgelegt sein oder ebenfalls nach mindestens einer Schlinge um das Brillengestell eine Durchtrittsöffnung 14 eines Brillenglases 3 durchgreifen und dahinter mit einer Verdickung versehen sein.

Eine Durchtrittsöffnung 14 ist bevorzugt konisch ausgebildet, so daß das Endstück eines Fadens 13 im Bereich der Oberfläche eines Glases abgetrennt werden kann und nicht über die Kontur eines Brillenglases 3 hervorsteht.

Nicht zeichnerisch dargestellt sind Ausführungsformen von Halterungen für Brillengläser, die jeweils über mehrere Durchtrittsöffnungen 14 und mehrere Fäden 13 verfügen.

## Patentansprüche

1. Brille Bestehend aus Brillengläsern und aus einem Brillengestell mit einer Halterung für die Brillengläser und mit über Scharniere an dem Brillengestell angelenkten Bügeln, wobei die Halterung für ein Brillenglas (3) aus mindestens einem, den Umfang eines Brillenglases (3) teilweise umschließenden Faden (13) besteht **dadurch gekennzeichnet, daß** ein Brillenglas (3) mit mindestens einer Durchtrittsöffnung (14) für den Faden (13) versehen ist und der durch die Durchtrittsöffnung (14) geführte Faden (13) hinter und/ oder vor dem Brillenglas (3) mit einer Verdickung (15) versehen ist, die stärker ist als die Durchtrittsöffnung (14) weit und daß der Faden (13) mindestens einfach um das Brillengestell (1) herumgewunden ist.

2. Brille nach Anspruch 1, **dadurch gekennzeichnet, daß** die Enden eines Fadens (13) durch jeweils eine Durchtrittsöffnung (14) des Brillenglases (3) hindurchgeführt und die Enden des Fadens (13) dahinter mit jeweils einer Verdickung (15) versehen sind.

3. Brille nach einem der vorgenannten Ansprüche, **dadurch gekennzeichnet, daß** die Durchtrittsöffnung (14) mindestens teilweise konisch ausgebildet ist.

## Claims

1. Spectacles comprising spectacle lenses and a spectacle mount with a securing means for the spectacle lenses and with side pieces articulated on the spectacle mount via hinges, the securing means for a spectacle lens (3) comprising at least one filament (13) which partially surrounds the periphery of a spectacle lens (3), **characterized in that** a spectacle lens (3) is provided with at least one through-passage opening (14) for the filament (13), and the filament (13) which, is guided through the through-passage opening (14), is provided, behind and/or in front of the spectacle lens (3), with a thickened portion (15) which is thicker than the through-passage opening (14) is wide, and **in that** the filament (13) is wound around the spectacle mount (1) at least once.

2. Spectacles according to Claim 1, **characterized in that** the ends of the filament (13) are guided through in each case one through-passage opening (14) of the spectacle lens (3), and the ends of the filament (13) are provided with in each case one thickened portion (15) behind said spectacle lens.

3. Spectacles according to one of the preceding claims, **characterized in that** the through-passage opening (14) is of at least partially conical design.

## Revendications

1. Lunettes, se composant de verres de lunettes et d'une monture de lunettes avec un support pour les verres de lunettes et avec des branches articulées par des charnières à la monture de lunettes, le support pour un verre de lunettes (3) se composant d'au moins un fil (13) entourant partiellement le pourtour d'un verre de lunettes (3), **caractérisées en ce qu'**un verre de lunettes (3) avec au moins une ouverture de passage (14) pour le fil (13) est prévu et le fil (13) guidé à travers l'ouverture de passage (14) est pourvu derrière et/ou devant le verre de lunettes (3) d'un épaississement (15), qui est plus épais que l'ouverture de passage (14) est large et **en ce que** le fil (13) est enroulé au moins une fois autour de la monture de lunettes (1).

2. Lunettes selon la revendication 1, **caractérisées en ce que** les extrémités d'un fil (13) sont passées à chaque fois à travers une ouverture de passage (14) du verre de lunettes (13) et les extrémités du fil (13) sont pourvues à l'arrière à d'un épaississement respectif (15).

3. Lunettes selon l'une quelconque des revendications précédentes, **caractérisées en ce que** l'ouverture de passage (14) est réalisée avec une forme au moins en partie conique.
